(19) Europäisches Patentamt / European Patent Office / Office européen des brevets

(11) **EP 3 619 805 B1**

(12) **EUROPÄISCHE PATENTSCHRIFT**

(45) Veröffentlichungstag und Bekanntmachung des Hinweises auf die Patenterteilung:
**02.08.2023  Patentblatt 2023/31**

(21) Anmeldenummer: **18719884.1**

(22) Anmeldetag: **25.04.2018**

(51) Internationale Patentklassifikation (IPC):
**H02P 6/185** (2016.01)      **H02P 21/32** (2016.01)
**H02P 21/18** (2016.01)

(52) Gemeinsame Patentklassifikation (CPC):
**H02P 6/185; H02P 21/18; H02P 21/32;**
H02P 2203/03

(86) Internationale Anmeldenummer:
**PCT/EP2018/060599**

(87) Internationale Veröffentlichungsnummer:
**WO 2018/202508 (08.11.2018 Gazette 2018/45)**

(54) **VERFAHREN UND VORRICHTUNG ZUM BESTIMMEN DES LAGEWINKELS EINES ROTORS EINER ELEKTRISCHEN SYNCHRONMASCHINE**

METHOD AND DEVICE FOR DETERMINING THE POSITION ANGLE OF A ROTOR IN AN ELECTRIC SYNCHRONOUS MACHINE

PROCÉDÉ ET DISPOSITIF DE DÉTERMINATION DE L'ANGLE DE POSITION D'UN ROTOR D'UNE MACHINE SYNCHRONE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.05.2017   DE 102017207296**

(43) Veröffentlichungstag der Anmeldung:
**11.03.2020   Patentblatt 2020/11**

(73) Patentinhaber: **Robert Bosch GmbH**
**70442 Stuttgart (DE)**

(72) Erfinder:
• **MAASS, Alexander**
  **71636 Ludwigsburg (DE)**
• **ESTEGHLAL, Gholamabas**
  **70499 Stuttgart -Weilimdorf (DE)**

(56) Entgegenhaltungen:
EP-A1- 2 437 391      US-A1- 2007 040 528
US-A1- 2015 134 284      US-A1- 2015 207 446

• **SCHROEDL M: "Sensorless control of AC machines at low speed and standstill based on the "INFORM" method", CONFERENCE RECORD OF THE 1996 IEEE INDUSTRY APPLICATIONS CONFERENCE - 31ST IAS ANNUAL MEE, IEEE SERVICE CENTER, US, Bd. 1, 6. Oktober 1996 (1996-10-06), Seiten 270-277, XP010201136, DOI: 10.1109/IAS.1996.557028 ISBN: 978-0-7803-3544-8**

**Beschreibung**

Die vorliegende Erfindung betrifft ein Verfahren und eine Vorrichtung zum Bestimmen des Lagewinkels eines Rotors einer elektrischen Synchronmaschine, insbesondere einer permanenterregten Synchronmaschine, bevorzugt eines als permanenterregte Synchronmaschine ausgebildeten Motors eines Fahrzeugs. Bei dem Fahrzeug kann es sich um ein teilweise elektrisch angetriebenes Fahrzeug (Hybridfahrzeug) oder um ein rein elektrisch angetriebenes Fahrzeug (Elektrofahrzeug) handeln.

Stand der Technik

Eine Synchronmaschine ist eine Drehstrommaschine, in der der Rotor, welcher auch Läufer genannt wird, synchron mit dem Drehfeld des Stators, welcher auch Ständer genannt wird, läuft. Das Drehfeld des Stators wird durch Erzeugen von elektrischen Strömen und Spannungen in sich periodisch verändernden elektrischen Winkeln erzeugt und gedreht. In Synchronmaschinen wird das umlaufende Statormagnetfeld durch eine Vielzahl von zueinander versetzten Statorwicklungen erzeugt, wobei der Rotor eine fest eingeprägte Magnetisierungsrichtung aufweist. Synchronmotoren werden häufig als Antriebsmaschinen verwendet, zum Beispiel als Antriebe für Fahrzeuge, Schiffe und Züge.

Um bei der elektrischen Synchronmaschine ein gerichtetes Drehmoment erzeugen zu können, muss die Lage des Rotors relativ zum Stator, d. h. der sogenannte Lagewinkel des Rotors oder Rotorlagewinkel, genau bekannt sein. Hierbei ist nicht die äußerlich erkennbare mechanische Lage des Rotors zu dem Stator entscheidend, sondern die elektromagnetisch wirksame Lage, welche aufgrund der jeweils vorliegenden Polpaarzahl sowie durch Bauteiltoleranzen in dem Rotor und dem Stator von der mechanischen Lage abweicht. Genauer gesagt ist der elektrische Winkel zwischen dem Rotormagnetfeld zu dem Statormagnetfeld entscheidend. Im Folgenden sind mit allen Winkelangaben ausschließlich elektrische Winkel gemeint.

In der DE 10 2008 042 360 A1 ist die Bestimmung eines Rotorwinkels einer Synchronmaschine im Stillstand beschrieben, wobei Spannungspulse mit verschiedenen elektrischen Winkeln an die Synchronmaschine angelegt werden.

Bei dem Bestimmen des Rotorlagewinkels kann es zu einer 180°-Doppeldeutigkeit kommen. Darunter ist zu verstehen, dass der Rotorlagewinkel zunächst nur bis auf 180° genau bestimmt werden kann, d. h. es kann beispielsweise nicht zwischen einem Rotorlagewinkel mit 7° und einem Rotor Lagewinkel mit 187° unterschieden werden.

In den wissenschaftlichen Veröffentlichungen

- M. Schroedl, "Sensorless control of AC machines at low speed and standstill based on the "INFORM" method", Industry Applications Conference, 1996, 31st IAS Annual Meeting, Conference Record of the 1996 IEEE, 1996, pp. 270-277 vol.1.
  und
- J. Holtz, "Initial Rotor Polarity Detection and Sensorless Control of PM Synchronous Machines", Industry Applications Conference, 2006, 41st IAS Annual Meeting, Conference Record of the 2006 IEEE, 2006, 4, 2040-2047,

sind Verfahren beschrieben, welche unter Verwendung von Sättigungspulsen eine etwaige 180°-Doppeldeutigkeit auflösen können.

Die Druckschriften US 2007/040528 A1 und EP 2 437 391 A1 offenbaren Verfahren und Vorrichtungen, die dazu eingerichtet sind, die Rotorlageposition ohne einen Rotorlagesensor zu bestimmen und elektrische Maschinen mit der bestimmten Rotorlageposition zu betreiben.

Aus der Druckschrift US 2015/207446 A1 ist ein weiteres Verfahren und eine Vorrichtung zum Bestimmen des Lagewinkels eines Rotors einer elektrischen Synchronmaschine bekannt.

Offenbarung der Erfindung

Die vorliegende Erfindung offenbart ein Verfahren mit den Merkmalen des Patentanspruchs 1 und eine Vorrichtung mit den Merkmalen des Patentanspruchs 10.

Demgemäß wird ein Verfahren zum Bestimmen des Lagewinkels eines Rotors einer elektrischen Synchronmaschine bereitgestellt, mit den Schritten: Erzeugen von elektrischen Spannungspulsen mit, oder an, vorbestimmten elektrischen Winkeln in einem auf einen Stator der elektrischen Synchronmaschine bezogenen statorfesten Koordinatensystem bei stehendem Rotor der Synchronmaschine; Messen eines jeweiligen, auf die erzeugten elektrischen Spannungspulse zurückgehenden elektrischen Stromwerts; Speichern eines Stromsignalverlaufs der gemessenen Stromwerte; Erzeugen eines mittelwertfreien Stromsignalverlaufs durch Verschieben des gespeicherten Stromsignalverlaufs und/oder der gemessenen Stromwerte; Berechnen einer Integralfunktion des mittelwertfreien Stromsignalverlaufs; und Bestimmen des Lagewinkels des Rotors basierend auf der berechneten Integralfunktion des mittelwertfreien Stromsignalverlaufs.

Insbesondere ist die Bedeutung des Begriffs "basierend" im Rahmen der Erfindung entsprechend dem Begriff "in Abhängigkeit von" auszulegen. Insbesondere ist die Bedeutung des Begriffs "auf etwas zurückgehen" im Rahmen der Erfindung entsprechend dem Begriff "aus etwas resultierend" auszulegen.

Das Erzeugen der Spannungspulse mit den vorbestimmten elektrischen Winkeln umfasst ein Erzeugen von Spannungspulsen und ein Anlegen der erzeugten Spannungspulse derart an Statorwicklungen des Stators der elektrischen Synchronmaschine, dass das Statormagnetfeld darauf basierend mit einer Winkelrichtung in Richtung des vorbestimmten elektrischen Winkels erzeugt wird.

Unter dem für einen vorbestimmten elektrischen Winkel gemessenen Stromwert ist derjenige Stromwert zu verstehen, der auf den mit diesem vorbestimmten elektrischen Winkel erzeugten Spannungspuls zurückgeht.

Unter dem mittelwertfreien Stromsignalverlauf ist ein Stromsignalverlauf zu verstehen, welcher einen Mittelwert von Null aufweist.

Um eine genaue Ermittlung des Lagewinkels des Rotors zu ermöglichen, werden die elektrischen Spannungspulse vorzugsweise derart erzeugt, dass der Rotor durch die elektrischen Spannungspulse nicht in Rotation gerät, d. h., sich nicht dreht. Die dementsprechend begrenzte mögliche Höhe der Spannungspulse verschlechtert gewöhnlicherweise ein Signal-zu-Rausch-Verhältnis, was durch die vorliegend beschriebenen Verfahrensschritte jedoch zumindest kompensiert wird.

Bevorzugt ist zu jedem vorbestimmten Winkel auch ein jeweiliger um 180° erhöhter elektrischer Winkel vorbestimmt (also beispielsweise zu einem elektrischen Winkel von 7° auch ein elektrischer Winkel von 187°). In diesem Fall erfolgt das Speichern des Stromsignalverlaufs der Stromwerte besonders bevorzugt in Abhängigkeit (d.h. z.B. als Funktion) lediglich von Winkeln in einer Hälfte von 360°, wobei der Wert zu jedem vorbestimmten elektrischen Winkel in der einen Hälfte von 360° sowohl aus mindestens einem für diesen vorbestimmten elektrischen Winkel gemessenen Stromwert als auch aus mindestens einem für den um 180° verschobenen vorbestimmten elektrischen Winkel gemessenen Stromwert ermittelt wird. Mit anderen Worten können die gemessenen Stromwerte für elektrische Winkel in der anderen Hälfte von 360°, elektrischen Winkeln in der einen Hälfte von 360° zugewiesen, oder, anders ausgedrückt, zugewiesen werden, wobei für das Speichern des Stromsignalverlaufs unberücksichtigt bleiben kann, ob ein bestimmter gemessener Stromwert ursprünglich aus der einen, oder aus der anderen Hälfte von 360° stammte.

Die eine Hälfte von Winkeln von 360° kann beispielsweise zwischen 0° und <180° liegen, sodass sich die andere Hälfte von 360° von 180° bis <360° erstreckt. Somit kann jeder der gemessenen elektrischen Stromwerte für beispielsweise den vorbestimmten elektrischen Winkel von 183° (in der anderen Hälfte) dem elektrischen Winkel von 3° in der einen Hälfte zugewiesen werden, sodass der Stromsignalverlauf für den elektrischen Winkel von 3° entsprechend mit einem Wert basierend sowohl auf dem oder den für 3°, als auch basierend auf dem oder den für 183° gemessenen Stromwert bzw. Stromwerten erzeugt oder gespeichert wird.

Die Bedeutung des Begriffs "basierend" ist im Rahmen der Erfindung entsprechend dem Begriff "in Abhängigkeit von" auszulegen.

Je nachdem, ob pro elektrischem Winkel ein einziger elektrische Spannungspuls erzeugt und ein entsprechender elektrischer Stromwert gemessen wird, oder ob mehrere elektrischen Spannungspulse erzeugt und/oder mehrere elektrischen Stromwerte gemessen werden, basiert jeder Wert des gespeicherten Stromsignalverlaufs somit vorteilhaft pro vorbestimmtem Winkel in der einen Hälfte von 360° auf zwei oder mehr Werten, wobei der Wert für jeden vorbestimmten Winkel insbesondere durch Mitteln oder Summieren aller diesem vorbestimmten Winkel zugewiesenen gemessenen Stromwerte erzeugt werden kann, d.h. z.B. für 3° durch Mitteln oder Summieren über alle bei 3° und bei 183° gemessenen Stromwerte.

Der Stromsignalverlauf kann insbesondere in Abhängigkeit von lediglich den vorbestimmten elektrischen Winkeln gespeichert werden, z.B. nur elektrischen Winkeln in Abständen von 3° (z.B. 0°, 3°, 6, ...). Der Stromsignalverlauf kann also als eine Funktion mit einer diskreten Definitionsmenge ausgebildet sein. Alternativ kann der Stromsignalverlauf auch mit Werten für zwischen den vorbestimmten elektrischen Winkeln liegende elektrische Winkel erzeugt oder gespeichert werden, welche durch eine Interpolation erzeugt werden können.

Alternativ zu den oben beschriebenen Werten versteht es sich, dass die eine Hälfte der Winkel von 360° sich auch zwischen zum Beispiel 15° und <195° und die andere Hälfte sich von 195° bis <15° erstrecken kann, d. h., dass die 360° an einer beliebigen Stelle in 2 gleich große Hälften eingeteilt werden können, wobei der Stromsignalverlauf als Definitionsbereich nur eine der beiden Hälften von 360° aufweist.

Alternativ kann der Stromsignalverlauf auch basierend auf den gemessenen Stromwerten für alle vorbestimmten elektrischen Winkel gespeichert werden, d.h. es braucht kein Zuweisen von elektrischen Winkeln in einer Hälfte zu elektrischen Winkeln in der anderen Hälfte stattzufinden. Die vorbestimmten elektrischen Winkel können gleichverteilt über 360° angeordnet sein.

Weiterhin wird eine Vorrichtung zum Bestimmen des Lagewinkels eines Rotors einer elektrischen Synchronmaschine bereitgestellt, umfassend: eine Spannungserzeugungseinrichtung, welche zum Erzeugen von elektrischen Spannungspulsen mit, oder an, vorbestimmten elektrischen Winkeln in einem auf einen Stator der elektrischen Synchronmaschine bezogenen, statorfesten Koordinatensystem bei stehendem Rotor der Synchronmaschine eingerichtet ist; eine Messeinrichtung, welche zum Messen eines jeweiligen, auf die durch die Spannungserzeugungseinrichtung erzeugten elektrischen Spannungspulse zurückgehenden elektrischen Stromwerts eingerichtet ist; und einer Recheneinrichtung, welche dazu eingerichtet ist:

- einen Stromsignalverlauf der gemessenen Stromwerte zu speichern;
- einen mittelwertfreien Stromsignalverlauf zu erzeugen, indem der Stromsignalverlauf und/oder die gemessenen Stromwerte verschoben werden;
- eine Integralfunktion des mittelwertfreien Stromsignalverlaufs zu berechnen; und
- den Lagewinkel des Rotors basierend auf der berechneten Integralfunktion zu bestimmen.

In einer besonders bevorzugten Ausführungsform ist die Spannungserzeugungseinrichtung derart eingerichtet, dass zu jedem vorbestimmten Winkel auch ein jeweiliger, um 180° erhöhter elektrischer Winkel vorbestimmt ist. In dieser Ausführungsform kann die Recheneinrichtung dazu eingerichtet sein, den Stromsignalverlauf der Stromwerte in Abhängigkeit (d.h. z.B. als eine Funktion) lediglich von Winkeln in einer Hälfte von 360° zu speichern, wobei der Wert des Stromsignalverlaufs zu jedem vorbestimmten elektrischen Winkel in der einen Hälfte von 360° sowohl aus mindestens einem für diesen vorbestimmten elektrischen Winkel gemessenen Stromwert als auch aus mindestens einem für den um 180° verschobenen vorbestimmten elektrischen Winkel gemessenen Stromwert ermittelt wird.

Vorteile der Erfindung

Das hierin beschriebene Verfahren, sowie die hierin beschriebene Vorrichtung, ermöglichen es, auch bei größeren stochastischen Messfehlern bei dem Messen der elektrischen Stromwerte den Lagewinkel des Rotors einer elektrischen Synchronmaschine, bevorzugt einer permanenterregten Synchronmaschine, besonders genau zu bestimmen. Da die Spannungserzeugungseinrichtung, die Messeinrichtung und eine Art von Recheneinrichtung üblicherweise ohnehin zum Betreiben der Synchronmaschine benötigt werden, kommt die hierin beschriebene Vorrichtung mit besonders wenig, oder gar keinen, zusätzlichen Elementen aus. Die Vorrichtung kann insbesondere in eine Synchronmaschine integriert sein.

Insbesondere durch das Verwenden einer Integralfunktion führen Messfehler im Gegensatz zu Verfahren, welche auf Ableitungsfunktionen basieren, zu deutlich geringeren Fehlern im ermittelten Rotorlagewinkel.

Die Erfindung basiert auf der Erfassung der Induktivität in verschiedenen elektrischen Winkelrichtungen, die nicht nur durch die Ausrichtung einer Statorwicklung vorgegeben sind, sondern durch gezieltes Abfragen der Induktivität in einer beliebigen Winkelposition, wobei durch geeignete Kombination mindestens zweier Statorwicklungen eine beliebige Winkelposition abgefragt werden kann. Mit anderen Worten können durch gezieltes Anlegen von Spannungen an zwei oder mehr Statorwicklungen die Spannungspulse mit den vorbestimmten elektrischen Winkeln erzeugt werden. Prinzipiell wird ein äußeres Magnetfeld (durch den Stator, basierend auf den erzeugten Spannungspulsen) mit einer bestimmten Winkelrichtung (d.h. mit einem vorbestimmten elektrischen Winkel) angelegt, und der daraus resultierende (dazu verzögerte) Strom wird erfasst, der sich gemäß: $u(t) = L \cdot (di/dt)$ verhält. Die effektive magnetische Permeabilität des Rotors in Abhängigkeit von dem Winkel ergibt sich durch das Material des Rotors, insbesondere durch Kombination verschiedener Materialien verschiedener magnetischer Permeabilität und insbesondere die Ausformung des Rotors, die nicht rotationssymmetrisch ist.

Vorteilhafte Ausführungsformen und Weiterbildungen ergeben sich aus den Unteransprüchen sowie aus der Beschreibung unter Bezugnahme auf die Fig. en.

Erfindungsgemäß umfasst das Bestimmen des Lagewinkels des Rotors die Schritte: Bestimmen eines Mittelwerts der berechneten Integralfunktion; und Bestimmen eines ersten Winkelwerts, an welchem die berechnete Integralfunktion den bestimmten Mittelwert der berechneten Integralfunktion schneidet; wobei das Bestimmen des Lagewinkels des Rotors basierend auf dem bestimmten ersten Winkelwert erfolgt. Somit kann ein Extremwert des gespeicherten Stromsignalverlaufs einfach und präzise bestimmt werden und zum Bestimmen des Rotorlagewinkels dienen.

Gemäß einer besonders bevorzugten Weiterbildung wird derjenige Winkelwert als der erste Winkelwert bestimmt, an welchem die berechnete Integralfunktion den bestimmten Mittelwert der berechneten Integralfunktion während eines Anstiegs der berechneten Integralfunktion von niedrigen Werten hin zu höheren Werten schneidet. Auf diese Weise kann ein Maximum des gespeicherten sowie des mittelwertfreien Stromsignalverlaufs einfach und präzise bestimmt werden, wobei dieses Maximum die D-Achse oder die D'-Achse des Rotors in einem rotorfesten Koordinatensystem indiziert. Sowohl die D-Achse als auch die D'-Achse sind rotorfest; die D-Achse zeigt in Richtung des Lagewinkels des Rotors, die D'-Achse ist um 180° Grad gedreht zu der D-Achse angeordnet.

Gemäß einer weiteren bevorzugten Weiterbildung wird zusätzlich ein zweiter Winkelwert bestimmt, an welchem die berechnete Integralfunktion den bestimmten Mittelwert der berechneten Integralfunktion während eines Abfalls der berechneten Integralfunktion von höheren Werten hin zu niedrigeren Werten schneidet, wobei das Bestimmen des Lagewinkels des Rotors zusätzlich basierend auf dem bestimmten zweiten Winkelwert erfolgt. Auf diese Weise kann ein Minimum des mittelwertfreien Stromsignalverlaufs einfach und präzise bestimmt werden und zum Bestimmen des Rotorlagewinkels dienen.

Gemäß einer weiteren bevorzugten Weiterbildung werden eine Summe und/oder ein Durchschnitt der gemessenen Stromwerte für den ersten Winkelwert mit einer Summe und/oder einem Durchschnitt der gemessenen Stromwerte für einen dritten Winkelwert, welcher gleich dem bestimmten ersten Winkelwert plus 180° ist, verglichen. Von dem ersten Winkelwert und dem zweiten Winkelwert wird derjenige Winkelwert als Lagewinkel des Rotors bestimmt, für den die Summe und/oder der Durchschnitt der gemessenen Stromwerte größer ist. Somit kann eine 180°-Doppeldeutigkeit auf besonders einfache Weise aufgelöst werden.

Gemäß einer weiteren bevorzugten Weiterbildung umfasst das Bestimmen des Lagewinkels des Rotors weiterhin die Schritte: Erzeugen eines ersten elektrischen Sättigungspulses elektrisch mit dem bestimmten ersten Winkelwert; Messen eines ersten elektrischen Stromwerts, welcher auf den ersten elektrischen Sättigungspuls zurückgeht; Erzeugen eines zweiten elektrischen Sättigungspulses elektrisch mit einem dritten Winkelwert, welcher gleich dem bestimmten ersten Winkelwert plus 180° ist; Messen eines zweiten elektrischen Stromwerts, welcher auf den zweiten elektrischen Sättigungspuls zurückgeht; Bestimmen des ersten Winkelwerts als Lagewinkel des Rotors, falls der erste elektrische Stromwert größer als der zweite elektrische Stromwert ist, und des dritten Winkelwerts als Lagewinkel des Rotors, falls der zweite elektrische Stromwert größer als der erste elektrische Stromwert ist.

Gemäß einer weiteren bevorzugten Weiterbildung wird mit jedem der vorbestimmten elektrischen Winkel eine Mehrzahl von Spannungspulsen erzeugt und die jeweils darauf zurückgehenden elektrischen Stromwerte gemessen; und der Stromsignalverlauf wird basierend auf allen gemessenen Stromwerten erstellt. Hierdurch kann sich eine Genauigkeit des Bestimmens des Lagewinkels des Rotors verbessern.

Gemäß einer weiteren bevorzugten Weiterbildung sind die Werte des gespeicherten Stromsignalverlaufs jeweils durch den Mittelwert oder die Summe aller einem jeweiligen vorbestimmten elektrischen Winkel (z.B. in der einen Hälfte von 360°) zugewiesenen elektrischen Stromwerte gegeben.

Gemäß einer weiteren bevorzugten Weiterbildung weisen die Spannungspulse eine Pulshöhe von zwischen 1 Volt und 10 Volt auf. Gemäß einer weiteren bevorzugten Weiterbildung weisen die Spannungspulse eine Pulsdauer von zwischen 1 Mikrosekunde und 1000 Mikrosekunden auf. In jedem Fall werden die Spannungspulse derart erzeugt, dass der stehende Rotor durch die Spannungspulse nicht in Rotation versetzt wird, d.h. stehen bleibt.

Gemäß einer weiteren bevorzugten Weiterbildung wird nach einem Abklingen eines jeden erzeugten Spannungspulses und/oder nach dem Messen des jeweiligen elektrischen Stromwerts eine vorbestimmte Zeitspanne abgewartet, bevor ein nächster Spannungspuls erzeugt wird. Die vorbestimmte Zeitspanne kann beispielsweise zwischen 1 Mikrosekunde und 500 Mikrosekunden betragen, insbesondere 100 Mikrosekunden.

Kurze Beschreibung der Zeichnungen

Die vorliegende Erfindung wird nachfolgend anhand der in den schematischen Fig. en der Zeichnungen dargestellten Ausführungsbeispiele näher erläutert. Es zeigen:

Fig. 1          ein schematisches Blockdiagramm einer Vorrichtung zum Bestimmen des Lagewinkels eines Rotors einer elektrischen Synchronmaschine gemäß einer Ausführungsform der vorliegenden Erfindung;

Fig. 2 bis Fig. 4      schematische Darstellungen zum Erläutern der Funktionsweise der Vorrichtung aus Fig. 1; und

Fig. 5          ein schematisches Flussdiagramm zum Erläutern eines Verfahrens zum Bestimmen des Lagewinkels eines Rotors einer elektrischen Synchronmaschine gemäß einer weiteren Ausführungsform der vorliegenden Erfindung.

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

Beschreibung der Ausführungsbeispiele

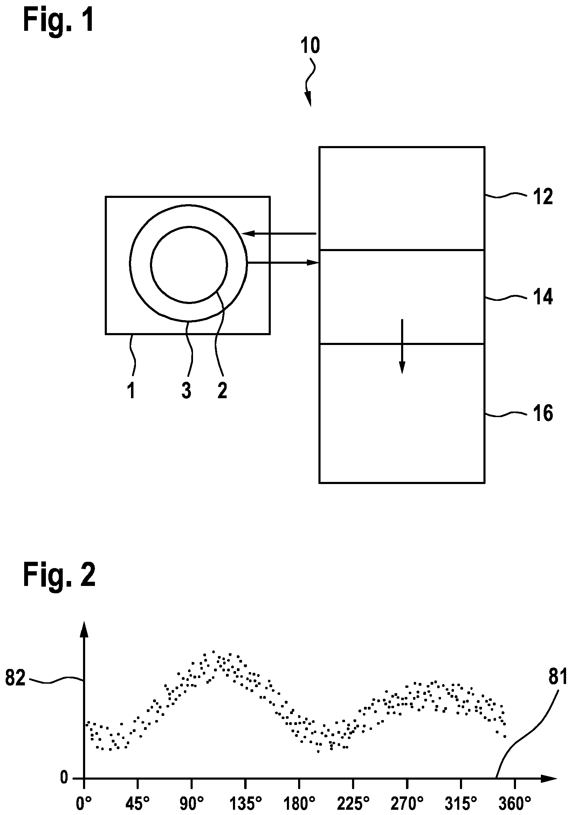

Fig. 1 zeigt ein schematisches Blockdiagramm einer Vorrichtung 10 zum Bestimmen des Lagewinkels eines Rotors 2 einer elektrischen permanenterregten Synchronmaschine 1 gemäß einer Ausführungsform der vorliegenden Erfindung. Die Vorrichtung 10 kann in die permanenterregte Synchronmaschine 1 integriert sein oder die permanenterregte Synchronmaschine 1 kann ein Teil der Vorrichtung 10 sein. Statt einer permanenterregten Synchronmaschine 1 kann die Vorrichtung 10 auch zur Anwendung auf eine beliebige Synchronmaschine 1 eingerichtet sein.

Die Vorrichtung 10 umfasst eine Spannungserzeugungseinrichtung 12, welche zum Erzeugen von jeweils mindestens einem elektrischen Spannungspuls mit, oder an, vorbestimmten elektrischen Winkeln in einem auf einen Stator 3 der elektrischen Synchronmaschine 1 bezogenen, statorfesten Koordinatensystem bei stehendem Rotor 2 der Synchronmaschine 1 ausgelegt oder eingerichtet ist, d.h. im Stillstand der Synchronmaschine 1. Bevorzugt ist die Spannungserzeugungseinrichtung 12 so ausgelegt oder eingerichtet, dass für jeden elektrischen Winkel zwischen 0° und, inklusive, 359°, oder jedenfalls kleiner als 360°, jeweils mindestens ein elektrischer Spannungspuls erzeugt wird.

Die Spannungserzeugungseinrichtung 12 ist weiterhin derart ausgelegt, dass alle elektrischen Winkel größer oder gleich 360° ($\varphi \geq 360°$) mit einem entsprechenden, um ein ganzzahliges Vielfaches n von 360° verringerten elektrischen Winkel ($\varphi$ - n*360°) zwischen 0° und <360° identifiziert werden. Mit anderen Worten wird hierin kein Unterschied gemacht zwischen dem elektrischen Winkel 15° und dem elektrischen Winkel 375° (=15°+360°).

Die Vorrichtung 10 umfasst außerdem eine Messeinrichtung 14, welche zum Messen je mindestens eines jeweiligen, auf die durch die Spannungserzeugungseinrichtung 12 erzeugten elektrischen Spannungspulse zurückgehenden, elektrischen Stromwerts eingerichtet ist. Während der Spannungspulse steigt nämlich der elektrische Strom in Abhängigkeit des Lagewinkels des Rotors 2 bzw. des von dem Rotor 2 der permanenterregten Synchronmaschine 1 permanent erzeugten Magnetfelds an. Die Spannungserzeugungseinrichtung 12 ist bevorzugt derart ausgebildet, dass der jeweilige elektrische Stromwert stets am Ende des durch die Spannungserzeugungseinrichtung 12 erzeugten elektrischen Spannungspulses gemessen wird.

Wird eine besonders schnell arbeitende Vorrichtung 10 benötigt, kann vorgesehen sein, dass nur an vorbestimmten elektrischen Winkeln mit größeren Winkelabständen als 1° Spannungspulse erzeugt und darauf zurückgehende Stromwerte gemessen werden. Beispielsweise können an insgesamt neunzig vorbestimmten elektrischen Winkeln in gleichen Abständen zwischen 0° und 360° (d.h. bei 0°, bei 4°, bei 8° usw.) Spannungspulse erzeugt und Stromwerte gemessen werden. Wird eine besonders genaue Vorrichtung 10 benötigt, kann vorgesehen sein, dass die Spannungserzeugungseinrichtung 12 in Winkelabständen von 1° jeweils mehrere (z.B. zwei, drei oder noch mehr) Spannungspulse erzeugt und dementsprechend jeweils mehrere Stromwerte für diesen vorbestimmten elektrischen Winkel durch die Messeinrichtung 14 gemessen werden. Vorteilhaft wird jedoch für jeden der vorbestimmten Winkel dieselbe Anzahl von Spannungspulsen erzeugt und dieselbe Anzahl von Stromwerten gemessen.

Vorteilhaft wird nach dem Erzeugen eines jeden Spannungspulses ein Puls in der Gegenrichtung erzeugt, damit der Strom möglichst schnell abklingt. Alternativ oder zusätzlich wird nach einem Abklingen eines jeden erzeugten Spannungspulses und/oder nach dem Messen des jeweiligen elektrischen Stromwerts eine vorbestimmte Zeitspanne abgewartet, bevor ein nächster Spannungspuls durch die Spannungserzeugungseinrichtung 12 erzeugt wird, wobei der nächste Spannungspuls zum, oder an dem, selben vorbestimmten elektrischen Winkel erzeugt werden kann oder an einem weiteren, zum Beispiel um 1° erhöhten, elektrischen Winkel. Die vorbestimmte Zeitspanne beträgt z.B. zwischen 1 Mikrosekunde und 500 Mikrosekunden.

Die Spannungspulse können eine Pulshöhe von zwischen einem 1 und 10 Volt aufweisen. Die Spannungserzeugungseinrichtung 12 kann derart eingerichtet sein, dass die Spannungspulse mit einer Pulsdauer von zwischen 1 Mikrosekunde und 1000 Mikrosekunden erzeugt werden. Dabei werden die Spannungspulse durch die Spannungserzeugungseinrichtung 12 vorteilhaft stets so erzeugt, dass der Rotor 2 durch die Spannungspulse nicht in Rotation, d. h. Drehung versetzt wird.

Die Vorrichtung 10 umfasst weiterhin eine Recheneinrichtung 16, welche beispielsweise als ein Mikrocontroller, eine anwendungsspezifische integrierte Schaltung (ASIC), ein FPGA oder einen Prozessor und einen Speicher eines Computers ausgebildet sein kann. Die Recheneinrichtung 16 ist dazu eingerichtet, einen Stromsignalverlauf in Abhängigkeit von Winkeln in einer Hälfte von 360° zu erzeugen und/oder zu speichern, beispielsweise in einer sich von 0° bis <180° erstreckenden Hälfte.

Ein beispielhafter Stromsignalverlauf aller gemessenen Stromwerte ist in Fig. 2 schematisch dargestellt, wobei eine horizontale Achse 81 elektrische Winkel von 0° bis 360° (= 0°) darstellt und eine vertikale Achse 82 elektrische Stromwerte darstellt.

Die Recheneinrichtung 16 ist weiterhin dazu eingerichtet, jeden an einem vorbestimmten Winkel in der anderen Hälfte von 360° (im obigen Beispiel sich von 180° bis <360° erstreckend) gemessenen elektrischen Stromwert dem jeweiligen, um 180° versetzten vorbestimmten Winkel in der einen Hälfte (von 0° bis <180°) zuzuweisen. Im obigen Beispiel werden entsprechend die für elektrisch 180° gemessenen Stromwerte dem vorbestimmten elektrischen Winkel von 0° zugewiesen, die für elektrisch 181° gemessenen Stromwerte dem vorbestimmten elektrischen Winkel von 1° zugewiesen usw.

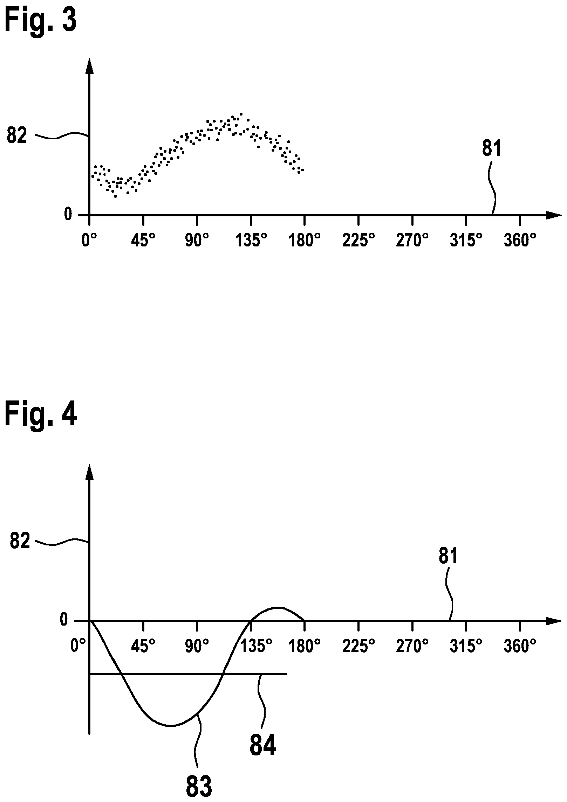

Durch die Recheneinrichtung 16 wird nun zum Speichern des Stromsignalverlaufs basierend auf allen vorbestimmten elektrischen Winkeln in der einen Hälfte (von 0° bis <180°) zugewiesenen Stromwerten ein jeweiliger Wert des Stromsignalverlaufs für diesen vorbestimmten elektrischen Winkel berechnet, z.B. durch Addition aller zugewiesenen Stromwerte oder durch Mittelwertbildung. Das Ergebnis dieses Schritts ist in Fig. 3 schematisch dargestellt.

Der Stromsignalverlauf von 0° bis <360° über die gemessenen Stromwerte hinweg kann bei einer realen elektrischen Maschine beispielsweise durch eine Reihe

$$a + b*\cos(\varphi) + c*\cos(2\,\varphi) + d*\cos(3\,\varphi) + e*\cos(4\,\varphi) + \ldots$$

dargestellt werden, wobei $\varphi$ den elektrischen Winkel bezeichnet und a, b, c, d, und e Koeffizienten sind und wobei a und c üblicherweise deutlich größer sind als alle anderen Koeffizienten.

Durch das Addieren der Stromwerte von jeweils den um 180° getrennten Winkeln (welches auch bei der Mittelwertbildung durchgeführt wird) fallen "ungeradzahlige Anteile" wie $\cos(\varphi)$, $\cos(3\,\varphi)$ und so weiter weg, da $\cos(n*(\varphi +180°)) = -\cos(n*\varphi)$ beträgt und so weiter für alle ungeradzahligen n. Nach diesem Schritt gibt es in der einen Hälfte der Winkel von 360° (beispielsweise von 0° bis <180°) ein in Fig. 3 deutlich erkennbares Maximum, welches der D-Achse oder der D'-Achse in einem statorbezogenen Koordinatensystem entspricht.

Weiterhin wird durch die Recheneinrichtung 16 ein mittelwertfreier Stromsignalverlauf erzeugt, welcher einen Mittelwert von Null aufweist. Dazu kann der Mittelwert des gespeicherten Stromsignalverlaufs ermittelt werden und der gespeicherte Stromsignalverlauf kann durch Subtrahieren des berechneten Mittelwerts von allen Werten des gespeicherten Stromsignalverlaufs verschoben werden, um den mittelwertfreien Stromsignalverlauf zu erhalten. Die Recheneinrichtung 16 ist außerdem dazu eingerichtet, eine Integralfunktion des mittelwertfreien Stromsignalverlaufs zu berechnen. In Fig. 4 ist beispielhaft eine die Integralfunktion repräsentierende Kurve 83 eingezeichnet.

Die Recheneinrichtung 16 ist weiterhin dazu eingerichtet, den Lagewinkel des Rotors 2 basierend auf der berechneten Integralfunktion 83 zu bestimmen. Bevorzugt erfolgt dies, indem ein Mittelwert (gerade Linie 84 in Fig. 4) der berechneten Integralfunktion 83 bestimmt wird.

Weiterhin wird nach dieser bevorzugten Variante durch die Recheneinrichtung 16 ein erster Winkelwert 85 bestimmt, an welchem die berechnete Integralfunktion 83 den bestimmten Mittelwert 84 der berechneten Integralfunktion 83 von unten nach oben schneidet. Das Bestimmen des Lagewinkels des Rotors 2 durch die Recheneinrichtung 16 erfolgt vorteilhaft basierend auf dem bestimmten ersten Winkelwert 85.

Mit anderen Worten wird derjenige Winkelwert als der erste Winkelwert 85 bestimmt, an welchem die berechnete Integralfunktion 83 den bestimmten Mittelwert 84 der berechneten Integralfunktion 83 während eines Anstiegs der berechneten Integralfunktion 83 von niedrigen Werten hin zu höheren Werten schneidet. Mit anderen Worten ist derjenige Winkelwert der erste Winkelwert 85, an welchem in der in Fig. 4 gezeigten grafischen Darstellung die Integralfunktion 83 den Mittelwert 84 von unten schneidet.

Üblicherweise werden Maxima einer Funktion durch eine mathematische Ableitung und das Bestimmen der Nullstellen der Ableitung ermittelt. Dieses Vorgehen kann den Nachteil haben, dass bei den in der Praxis häufig vorliegenden verrauschten Messwerten für die elektrischen Ströme eine diskrete Ableitung keine klare Nullstelle liefern würde.

Ein großer Vorteil der hierin beschriebenen Vorrichtung 10 besteht darin, dass dieses Maximum, welches der D-oder der D'-Achse entspricht, nicht durch eine Ableitung, sondern mittels der Integralfunktion bestimmt wird. Dies ist deswegen möglich, weil der gespeicherte Stromsignalverlauf periodisch ist und weil die Schnittpunkte der Integralfunktion mit dem Mittelwert der Integralfunktion bei den gleichen Winkeln liegen wie die Nullstellen der Ableitung des Stromsignalverlaufs. Die Ableitung einer Kosinusfunktion ist eine Sinusfunktion, das Integral einer Kosinusfunktion ist ebenfalls eine Sinusfunktion. Die Recheneinrichtung 16 der Vorrichtung 10 nutzt diese Eigenschaft aus. Das Integrieren der erfassten Stromwerte ist besonders vorteilhaft, da Messfehler nach dem Integrieren deutlich geringer sind oder sogar verschwinden, während Messfehler durch eine diskrete Ableitung deutlich verstärkt würden.

Nach dem Bestimmen des ersten Winkelwerts 85 verbleibt die im Voranstehenden bereits erläuterte Doppeldeutigkeit, da der tatsächliche Lagewinkel des Rotors 2 nun entweder dem elektrischen ersten Winkelwert 85 ($\varphi$) oder dem um 180° erhöhten ersten Winkelwert 85 (d.h. $\varphi+180°$) entsprechen kann.

Um diese Doppeldeutigkeit aufzulösen, wird bevorzugt vorgegangen wie folgt: Sowohl mit dem (oder für den) bestimmten elektrischen ersten Winkelwert 85 ($\varphi$) als auch bei dem (oder für den) um 180° erhöhten ersten Winkelwert 85 (d.h. $\varphi+180°$) wird jeweils ein elektrischer Sättigungspuls erzeugt, welcher beispielsweise 50 Volt oder mehr betragen kann, und zwar jeweils durch die Spannungserzeugungseinrichtung 12. Wie im Voranstehenden auf die anderen Spannungspulse beschrieben, kann jeweils am Ende des Sättigungspulses durch die Messeinrichtung 14 ein Stromwert gemessen werden. Die Recheneinrichtung 16 kann dazu eingerichtet sein, die beiden auf die Sättigungspulse zurückgehenden gemessenen elektrischen Stromwerte zu vergleichen und denjenigen Winkelwert als den Lagewinkel des Rotors 2 zu bestimmen, an welchem der auf den Sättigungspuls zurückgehende elektrische Stromwert höher ist.

Die Recheneinrichtung 16 kann weiterhin dazu eingerichtet sein, neben dem Maximum des Stromsignalverlaufs, d. h., neben dem ersten Winkelwert 85, auch einen zweiten Winkelwert 86 zu bestimmen, welcher einem Minimum des Stromsignalverlaufs entspricht. Die Recheneinrichtung 16 kann dazu eingerichtet sein, denjenigen Winkelwert als den zweiten Winkelwert 86 bestimmen, an welchem die berechnete Integralfunktion 83 den bestimmten Mittelwert 84 der berechneten Integralfunktion 83 während eines Abfalls der berechneten Integralfunktion 83 von höheren Werten hin zu niedrigeren Werten schneidet, d. h., an welchem die berechnete Integralfunktion 83 den bestimmten Mittelwert 84 in Fig. 4 von oben schneidet.

Das Bestimmen des Lagewinkels des Rotors 2 erfolgt vorteilhaft zusätzlich basierend auf dem bestimmten zweiten Winkelwert 86 ($\varphi$2). Das Minimum des gespeicherten Stromsignalverlaufs in Fig. 3 ist nämlich gegenüber dem Maximum um 90° verschoben. Somit kann ein dritter Winkelwert $\varphi$3 bestimmt werden, welcher dem um 90° erhöhten zweiten Winkelwert 86 (d.h. $\varphi$3 = $\varphi$2+90°) gleich ist, und der Lagewinkel des Rotors 2 kann als Mittelwert des ersten Winkelwerts 85 und des dritten Winkelwerts bestimmt werden. Alternativ kann auf das Ermitteln des zweiten Winkelwerts 86 verzichtet werden und es kann durch die Recheneinrichtung 16 einfach der erste Winkelwert 85 als der Lagewinkel des Rotors 2 bestimmt werden.

Zum Auflösen der Doppeldeutigkeit kann die Vorrichtung 10 alternativ auch derart ausgebildet sein, dass die Recheneinrichtung 16 die Höhe des Mittelwerts, oder der Summe, der an dem ersten Winkelwert 85 ursprünglich gemessenen Stromwerte vergleicht mit der Höhe des Mittelwerts, oder der Summe, der an dem um 180° erhöhten ersten Winkelwert 85 gemessenen Stromwerte, und daraufhin den Winkel, welcher in dem Vergleich den höheren Mittelwert, oder die höhere Summe von Stromwerten, aufweist, als den Lagewinkel des Rotors 2 bestimmt.

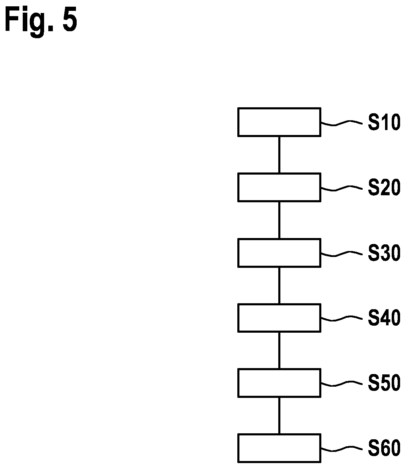

Fig. 5 zeigt ein schematisches Flussdiagramm zum Erläutern eines Verfahrens zum Bestimmen des Lagewinkels eines Rotors 2 einer elektrischen Synchronmaschine 1 gemäß einer weiteren Ausführungsform der vorliegenden Erfindung. Das Verfahren gemäß Fig. 5 ist insbesondere mit der im Voranstehenden beschriebenen Vorrichtung 10 durchführbar und ist gemäß allen in Bezug auf die Vorrichtung 10 beschriebenen Modifikationen, Varianten und Weiterbildungen anpassbar und umgekehrt.

In einem Schritt S10 wird je mindestens ein elektrischer Spannungspuls mit, oder an, vorbestimmten elektrischen Winkeln in einem auf einen Stator 3 der elektrischen Synchronmaschine 1 bezogenen statorfesten Koordinatensystem bei stehendem Rotor 2 der Synchronmaschine 1, d.h. im Stillstand der Synchronmaschine 1, erzeugt. Dabei ist bevorzugt zu jedem vorbestimmten Winkel auch ein jeweiliger, um 180° erhöhter elektrischer Winkel vorbestimmt. Der Schritt S10 kann insbesondere durch die Spannungserzeugungseinrichtung 12 der Vorrichtung 10 durchgeführt werden, wie im Voranstehenden beschrieben.

In einem Schritt S20 wird je mindestens ein jeweiliger, auf die erzeugten elektrischen Spannungspulse zurückgehende elektrischer Stromwert gemessen. Der Schritt S20 kann insbesondere durch die Messeinrichtung 14 der Vorrichtung 10 durchgeführt werden, wie im Voranstehenden beschrieben.

In einem Schritt S30 wird ein Stromsignalverlauf der gemessenen Stromwerte gespeichert, beispielsweise wie im Voranstehenden in Bezug auf die Recheneinrichtung 16 beschrieben. Bevorzugt wird der Stromsignalverlauf lediglich in Abhängigkeit von Winkeln in einer Hälfte von 360° erstellt. Dabei wird der Wert zu jedem vorbestimmten Winkel in der einen Hälfte von 360° sowohl aus mindestens einem für diesen vorbestimmten Winkel gemessenen Stromwert als auch aus mindestens einem, an einem um 180° erhöhten vorbestimmten Winkel gemessenen Stromwert ermittelt.

In einem Schritt S40 wird ein mittelwertfreier Stromsignalverlauf erzeugt, welcher einen Mittelwert von Null aufweist, beispielsweise indem der gespeicherte Stromsignalverlauf entsprechend nach oben oder unten verschoben wird. Alternativ dazu können auch vor dem Speichern des Stromsignalverlaufs die Stromwerte, auf denen der Stromsignalverlauf basiert, entsprechend verschoben, d.h. um deren Mittelwert verringert, werden.

In einem Schritt S50 wird eine Integralfunktion 83 des mittelwertfreien Stromsignalverlaufs berechnet. In einem Schritt S60 wird der Lagewinkel des Rotors 2 basierend auf der berechneten Integralfunktion 83 bestimmt. Die Schritte S30, S40, S50 und S60 können insbesondere durch die Recheneinrichtung 16 der Vorrichtung 10 durchgeführt werden, wie im Voranstehenden beschrieben.

**Patentansprüche**

1. Verfahren zum Bestimmen des Lagewinkels eines Rotors (2) einer elektrischen Synchronmaschine (1), mit den Schritten:

   Erzeugen (S10) von je mindestens einem elektrischen Spannungspuls mit vorbestimmten elektrischen Winkeln in einem auf einen Stator (3) der elektrischen Synchronmaschine (1) bezogenen statorfesten Koordinatensystem bei stehendem Rotor (2) der Synchronmaschine (1);
   Messen (S20) je mindestens eines jeweiligen, auf die erzeugten elektrischen Spannungspulse zurückgehenden elektrischen Stromwerts;
   Speichern (S30) eines Stromsignalverlaufs der gemessenen Stromwerte in Abhängigkeit der vorbestimmten elektrischen Winkel;
   Erzeugen (S40) eines mittelwertfreien Stromsignalverlaufs durch Verschieben des gespeicherten Stromsignalverlaufs oder der gemessenen Stromwerte;
   Berechnen (S50) einer Integralfunktion (83) des mittelwertfreien Stromsignalverlaufs; und
   Bestimmen (S60) des Lagewinkels des Rotors (2) basierend auf der berechneten Integralfunktion (83).

**dadurch gekennzeichnet, dass**
das Bestimmen (S60) des Lagewinkels des Rotors (2) die Schritte umfasst:

Bestimmen eines Mittelwerts (84) der berechneten Integralfunktion (83); und
Bestimmen eines ersten Winkelwerts (85), an welchem die berechnete Integralfunktion (83) den bestimmten Mittelwert (84) der berechneten Integralfunktion (83) schneidet;
wobei das Bestimmen (S60) des Lagewinkels des Rotors (2) basierend auf dem bestimmten ersten Winkelwert (85) erfolgt.

2.  Verfahren nach Anspruch 1,

wobei zu jedem vorbestimmten Winkel auch ein jeweiliger um 180° erhöhter elektrischer Winkel vorbestimmt ist; und
wobei der Stromsignalverlauf der gemessenen Stromwerte lediglich in Abhängigkeit von Winkeln in einer Hälfte von 360° gespeichert wird, wobei der Wert zu jedem vorbestimmten elektrischen Winkel in der einen Hälfte von 360° sowohl aus mindestens einem für diesen vorbestimmten elektrischen Winkel gemessenen Stromwert als auch aus mindestens einem für den um 180° verschobenen vorbestimmten elektrischen Winkel gemessenen Stromwert ermittelt wird.

3.  Verfahren nach Anspruch 1 oder 2,
wobei derjenige Winkelwert als der erste Winkelwert (85) bestimmt wird, an welchem die berechnete Integralfunktion (83) den bestimmten Mittelwert (84) der berechneten Integralfunktion (83) während eines Anstiegs der berechneten Integralfunktion (83) von niedrigen Werten hin zu höheren Werten schneidet.

4.  Verfahren nach Anspruch 3,

wobei zusätzlich ein zweiter Winkelwert bestimmt wird, an welchem die berechnete Integralfunktion (83) den bestimmten Mittelwert (84) der berechneten Integralfunktion (83) während eines Abfalls der berechneten Integralfunktion (83) von höheren Werten hin zu niedrigeren Werten schneidet, und
wobei das Bestimmen (S60) des Lagewinkels des Rotors (2) zusätzlich basierend auf dem bestimmten zweiten Winkelwert (86) erfolgt.

5.  Verfahren nach Anspruch 4,
wobei eine Summe und/oder ein Durchschnitt der gemessenen Stromwerte an dem ersten Winkelwert (85) mit einer Summe und/oder einem Durchschnitt der gemessenen Stromwerte an einem dritten Winkelwert, welcher gleich dem bestimmten ersten Winkelwert (85) plus 180° ist, verglichen wird, und wobei von dem ersten Winkelwert (85) und dem zweiten Winkelwert derjenige Winkelwert als Lagewinkel des Rotors (2) bestimmt wird, für den die Summe und/oder der Durchschnitt der gemessenen Stromwerte größer ist.

6.  Verfahren nach einem der Ansprüche 1 bis 4,
wobei das Bestimmen (S60) des Lagewinkels des Rotors (2) weiterhin die Schritte umfasst:

Erzeugen eines ersten elektrischen Sättigungspulses elektrisch mit dem bestimmten ersten Winkelwert (85);
Messen eines ersten elektrischen Stromwerts, welcher auf den ersten elektrischen Sättigungspuls zurückgeht;
Erzeugen eines zweiten elektrischen Sättigungspulses elektrisch mit einem dritten Winkelwert, welcher gleich dem bestimmten ersten Winkelwert (85) plus 180° ist;
Messen eines zweiten elektrischen Stromwerts, welcher auf den zweiten elektrischen Sättigungspuls zurückgeht;
Bestimmen des ersten Winkelwerts als Lagewinkel des Rotors (2), falls der erste elektrische Stromwert größer als der zweite elektrische Stromwert ist, und des dritten Winkelwerts als Lagewinkel des Rotors (2), falls der zweite elektrische Stromwert größer als der erste elektrische Stromwert ist.

7.  Verfahren nach einem der Ansprüche 1 bis 6,
wobei mit jedem der vorbestimmten elektrischen Winkel eine Mehrzahl von Spannungspulsen erzeugt und die jeweils darauf zurückgehenden elektrischen Stromwerte gemessen werden; und wobei der Stromsignalverlauf basierend auf allen gemessenen Stromwerten gespeichert wird.

8.  Verfahren nach einem der Ansprüche 1 bis 7,

wobei die Stromwerte des gespeicherten Stromsignalverlaufs jeweils durch den Mittelwert oder die Summe aller für einem jeweiligen vorbestimmten elektrischen Winkel ermittelten elektrischen Stromwerte gegeben sind.

9. Verfahren nach einem der Ansprüche 1 bis 8,

wobei nach dem Erzeugen eines jeden Spannungspulses ein Puls in der Gegenrichtung erzeugt und/oder nach einem Abklingen eines jeden erzeugten Spannungspulses und/oder nach dem Messen (S20) des jeweiligen elektrischen Stromwerts eine vorbestimmte Zeitspanne abgewartet wird, bevor ein nächster Spannungspuls erzeugt wird;
wobei die vorbestimmte Zeitspanne zwischen 1 Mikrosekunde und 500 Mikrosekunden beträgt.

10. Vorrichtung (10) zum Bestimmen des Lagewinkels eines Rotors (2) einer elektrischen Synchronmaschine (1), mit:

einer Spannungserzeugungseinrichtung (12), welche zum Erzeugen (S10) jeweils mindestens eines elektrischen Spannungspulses an vorbestimmten elektrischen Winkeln in einem auf einen Stator (3) der elektrischen Synchronmaschine (1) bezogenen, statorfesten Koordinatensystem bei stehendem Rotor (2) der Synchronmaschine (1) eingerichtet ist;
einer Messeinrichtung (14), welche zum Messen (S20) je mindestens eines jeweiligen, auf die durch die Spannungserzeugungseinrichtung (12) erzeugten elektrischen Spannungspulse zurückgehenden elektrischen Stromwerts eingerichtet ist; und
einer Recheneinrichtung (16), welche dazu eingerichtet ist:

- einen Stromsignalverlauf der gemessenen Stromwerte in Abhängigkeit der vorbestimmten elektrischen Winkel zu speichern;
- einen mittelwertfreien Stromsignalverlauf zu erzeugen, indem der Stromsignalverlauf und/oder die gemessenen Stromwerte verschoben werden;
- eine Integralfunktion (83) des mittelwertfreien Stromsignalverlaufs zu berechnen; und
- den Lagewinkel des Rotors (2) basierend auf der berechneten Integralfunktion (83) zu bestimmen

**dadurch gekennzeichnet, dass**
die Recheneinrichtung weiter zum Bestimmen (S60) des Lagewinkels des Rotors (2) eingerichtet ist:

einen Mittelwert (84) der berechneten Integralfunktion (83) zu bestimmen; und
einen ersten Winkelwerts (85) zu bestimmen, an welchem die berechnete Integralfunktion (83) den bestimmten Mittelwert (84) der berechneten Integralfunktion (83) schneidet;
wobei das Bestimmen (S60) des Lagewinkels des Rotors (2) basierend auf dem bestimmten ersten Winkelwert (85) erfolgt.

11. Vorrichtung (10) nach Anspruch 10,

wobei die Spannungserzeugungseinrichtung (12) derart eingerichtet ist, dass zu jedem vorbestimmten Winkel auch ein jeweiliger, um 180° erhöhter elektrischer Winkel vorbestimmt ist; und
wobei die Recheneinrichtung (16) dazu eingerichtet ist, den Stromsignalverlauf der Stromwerte in Abhängigkeit lediglich von Winkeln in einer Hälfte von 360° zu speichern, wobei der Wert zu jedem vorbestimmten elektrischen Winkel in der einen Hälfte von 360° sowohl aus mindestens einem für diesen vorbestimmten elektrischen Winkel gemessenen Stromwert als auch aus mindestens einem für den um 180° verschobenen vorbestimmten elektrischen Winkel gemessenen Stromwert ermittelt wird.

## Claims

1. Method for determining the position angle of a rotor (2) of an electric synchronous machine (1), having the steps:

generating (S10) in each case at least one electric voltage pulse with predetermined electrical angles in a stator-fixed coordinate system, referred to as a stator (3) of the electric synchronous machine (1), when the rotor (2) of the synchronous machine (1) is stationary;
measuring (S20) in each case at least one respective electrical current value arising from the generated electrical voltage pulses;

storing (S30) a current signal profile of the measured current values in accordance with the predetermined electrical angles;

generating (S40) a mean-value-free current signal profile by shifting the stored current signal profile or the measured current values;

calculating (S50) an integral function (83) of the mean-value-free signal current profile; and

determining (S60) the position angle of the rotor (2) on the basis of the calculated integral function (83),

**characterized in that**

the determination (S60) of the position angle of the rotor (2) comprises the steps:

determining a mean value (84) of the calculated integral function (83); and

determining a first angle value (85) at which the calculated integral function (83) intersects the determined mean value (84) of the calculated integral function (83);

wherein the determination (S60) of the position angle of the rotor (2) is carried out on the basis of the determined first angle value (85).

2. Method according to Claim 1,

wherein a respective electrical angle which is increased by 180° is also predetermined for each predetermined angle; and

wherein the current signal profile of the measured current values is stored only in accordance with angles in one half of 360°, wherein the value for each predetermined electrical angle in the one half of 360° is acquired both from at least one current value which is measured for this predetermined electrical angle and from at least one current value which is measured for the predetermined electrical angle which is shifted by 180°.

3. Method according to Claim 1 or 2,

wherein that angle value at which the calculated integral function (83) intersects the determined mean value (84) of the calculated integral function (83) during a rise in the calculated integral function (83) from low values to relatively high values is determined as the first angle value (85).

4. Method according to Claim 3,

wherein in addition a second angle value is determined at which the calculated integral function (83) intersects the determined mean value (84) of the calculated integral function (83) during a drop in the calculated integral function (83) from relatively high values to relatively low values, and

wherein the determination (S60) of the position angle of the rotor (2) additionally takes place on the basis of the determined second angle value (86).

5. Method according to Claim 4,

wherein a sum and/or an average of the measured current values at the first angle value (85) is compared with a sum and/or an average of the measured current values at a third angle value which is equal to the determined first angle value (85) plus 180°, and wherein of the first angle value (85) and the second angle value that angle value for which the sum and/or the average of the measured current values is larger is determined as the position angle of the rotor (2).

6. Method according to one of Claims 1 to 4,

wherein the determination (S60) of the position angle of the rotor (2) also includes the steps:

generating a first electrical saturation pulse electrically with the determined first angle value (85);

measuring a first electrical current value which arises from the first electrical saturation pulse;

generating a second electrical saturation pulse electrically with a third angle value which is the same as the determined first angle value (85) plus 180°;

measuring a second electrical current value which arises from the second electrical saturation pulse;

determining the first angle value as a position angle of the rotor (2) if the first electrical current value is higher than the second electrical current value, and determining the third angle value as a position angle of the rotor (2) if the second electrical current value is higher than the first electrical current value.

7. Method according to one of Claims 1 to 6,

wherein with each of the predetermined electrical angles a multiplicity of voltage pulses is generated and the electrical current values which arise in each case therefrom are measured; and wherein the current signal profile is stored on the basis of all the measured current values.

**8.** Method according to one of Claims 1 to 7,
wherein the current values of the stored current signal profile are each provided by the mean value or the sum of all the electrical current values acquired for a respective predetermined electrical angle.

**9.** Method according to one of Claims 1 to 8,

wherein after the generation of each voltage pulse a pulse is generated in the opposing direction,
and/or after the decay of each generated voltage pulse and/or after the measurement (S20) of the respective electrical current value a predetermined time period elapses before the next voltage pulse is generated;
wherein the predetermined time period is between 1 microsecond and 500 microseconds.

**10.** Device (10) for determining the position angle of a rotor (2) of an electric synchronous machine (1), having:

a voltage generating device (12) which is configured to generate (S10) in each case at least one electrical voltage pulse at predetermined electrical angles in a stator-fixed coordinate system, referred to as a stator (3) of the electric synchronous machine (1), when the rotor (2) of the synchronous machine (1) is stationary;
a measuring device (14) which is configured to measure (S20) in each case at least one respective electrical current value which arises from the electrical voltage pulses generated by the voltage generating device (12); and
a computing device (16) which is configured:

- to store a current signal profile of the measured current values in accordance with the predetermined electrical angles;
- to generate a mean-value-free current signal profile by shifting the current signal profile and/or the measured current values;
- to calculate an integral function (83) of the mean-value-free current signal profile; and
- to determine the position angle of the rotor (2) on the basis of the calculated integral function (83),

**characterized in that**
the computing device, to determine (S60) the position angle of the rotor (2), is further configured:

to determine a mean value (84) of the calculated integral function (83); and
to determine a first angle value (85) at which the calculated integral function (83) intersects the determined mean value (84) of the calculated integral function (83);
wherein the determination (S60) of the position angle of the rotor (2) is carried out on the basis of the determined first angle value (85).

**11.** Device (10) according to Claim 10,

wherein the voltage generating device (12) is configured in such a way that a respective electrical angle which is increased by 180° is also predetermined for each predetermined angle; and
wherein the computing device (16) is configured to store the current signal profile of the current values in accordance with only angles in one half of 360°, wherein the value for each predetermined electrical angle in the one half of 360° is acquired both from at least one current value which is measured for this predetermined electrical angle and from at least one current value which is measured for the predetermined electrical angle which is shifted by 180°.

**Revendications**

**1.** Procédé permettant de déterminer l'angle de position d'un rotor (2) d'une machine synchrone électrique (1), comprenant les étapes consistant à :

générer (S10) respectivement au moins une impulsion de tension électrique à des angles électriques prédéterminés dans un système de coordonnées solidaire du stator par rapport à un stator (3) de la machine synchrone électrique (1) lorsque le rotor (2) de la machine synchrone (1) est à l'arrêt ;
mesurer (S20) respectivement au moins une valeur de courant électrique respective dérivée des impulsions de tension électriques générées ;
stocker (S30) une courbe de signal de courant des valeurs de courant mesurées en fonction des angles électriques prédéterminés ;
générer (S40) une courbe de signal de courant à valeur moyenne nulle en décalant la courbe de signal de courant stockée ou les valeurs de courant mesurées ;
calculer (S50) une fonction intégrale (83) de la courbe de signal de courant à valeur moyenne nulle ; et
déterminer (S60) l'angle de position du rotor (2) sur la base de la fonction intégrale (83) calculée,
**caractérisé en ce que** la détermination (S60) de l'angle de position du rotor (2) comprend les étapes consistant à :

déterminer une valeur moyenne (84) de la fonction intégrale (83) calculée ; et
déterminer une première valeur d'angle (85) où la fonction intégrale calculée (83) intersecte la valeur moyenne déterminée (84) de la fonction intégrale calculée (83) ;
dans lequel la détermination (S60) de l'angle de position du rotor (2) est effectuée sur la base de la première valeur d'angle déterminée (85).

2. Procédé selon la revendication 1,

dans lequel un angle électrique respectif, augmenté de 180°, est également prédéterminé pour chaque angle prédéterminé ; et
dans lequel la courbe de signal de courant des valeurs de courant mesurées est stockée uniquement en fonction des angles dans une moitié de 360°, dans lequel la valeur pour chaque angle électrique prédéterminé est établie dans ladite une moitié de 360°, à la fois à partir d'au moins une valeur de courant mesurée pour cet angle électrique prédéterminé et à partir d'au moins une valeur de courant mesurée pour l'angle électrique prédéterminé, décalé de 180°.

3. Procédé selon la revendication 1 ou 2,
dans lequel la valeur d'angle est déterminée comme la première valeur d'angle (85) à laquelle la fonction intégrale calculée (83) intersecte la valeur moyenne déterminée (84) de la fonction intégrale calculée (83) pendant une montée de la fonction intégrale calculée (83) des valeurs inférieures aux valeurs supérieures.

4. Procédé selon la revendication 3,

dans lequel en plus une deuxième valeur d'angle est déterminée à laquelle la fonction intégrale calculée (83) intersecte la valeur moyenne déterminée (84) de la fonction intégrale calculée (83) pendant une chute de la fonction intégrale calculée (83) des valeurs supérieures aux valeurs inférieures, et
dans lequel la détermination (S60) de l'angle de position du rotor (2) est effectuée en plus sur la base de la deuxième valeur d'angle déterminée (86).

5. Procédé selon la revendication 4,
dans lequel une somme et/ou une moyenne arithmétique des valeurs de courant mesurées pour la première valeur d'angle (85) est comparée avec une somme et/ou une moyenne arithmétique des valeurs de courant mesurées pour une troisième valeur d'angle qui est égale à la première valeur d'angle déterminée (85) plus 180°, et dans lequel parmi la première valeur d'angle (85) et la deuxième valeur d'angle, on détermine la valeur d'angle comme angle de position du rotor (2) pour qui la somme et/ou la moyenne arithmétique des valeurs de courant mesurées est supérieure.

6. Procédé selon l'une quelconque des revendications 1 à 4,
dans lequel la détermination (S60) de l'angle de position du rotor (2) comprend en outre les étapes consistant à :

générer électriquement une première impulsion de saturation électrique par la première valeur d'angle déterminée (85) ;
mesurer une première valeur de courant électrique dérivée de la première impulsion de saturation électrique ;
générer électriquement une deuxième impulsion de saturation électrique par une troisième valeur d'angle qui est égale à la première valeur d'angle déterminée (85) plus 180° ;
mesurer une deuxième valeur de courant électrique dérivée de la deuxième impulsion de saturation électrique ;

déterminer la première valeur d'angle comme angle de position du rotor (2) si la première valeur de courant électrique est supérieure à la deuxième valeur de courant électrique, et déterminer la troisième valeur d'angle comme angle de position du rotor (2) si la deuxième valeur de courant électrique est supérieure à la première valeur de courant électrique.

7. Procédé selon l'une quelconque des revendications 1 à 6,
dans lequel pour chacun des angles électriques prédéterminés, une pluralité d'impulsions de tension est générée, et les valeurs de courant électriques qui en sont dérivées respectivement sont mesurées ; et dans lequel la courbe de signal de courant est stockée sur la base de toutes les valeurs de courant mesurées.

8. Procédé selon l'une quelconque des revendications 1 à 7,
dans lequel les valeurs de courant de la courbe de signal de courant stockée sont données respectivement par la valeur moyenne ou la somme de toutes les valeurs de courant électriques établies pour un angle électrique prédéterminé respectif.

9. Procédé selon l'une quelconque des revendications 1 à 8,

dans lequel une impulsion en sens inverse est générée après la génération de chaque impulsion de tension, et/ou après un évanouissement de chaque impulsion de tension générée et/ou après la mesure (S20) de la valeur de courant électrique respective, on attend un laps de temps prédéterminé avant la génération d'une impulsion de tension suivante ;
dans lequel le laps de temps prédéterminé est compris entre 1 microseconde et 500 microsecondes.

10. Dispositif (10) permettant de déterminer l'angle de position d'un rotor (2) d'une machine synchrone électrique (1), comprenant :

un moyen de génération de tension (12) qui est conçu pour générer (S10) respectivement au moins une impulsion de tension électrique à des angles électriques prédéterminés dans un système de coordonnées solidaire du stator par rapport à un stator (3) de la machine synchrone électrique (1) lorsque le rotor (2) de la machine synchrone (1) est à l'arrêt ;
un moyen de mesure (14) qui est conçu pour mesurer (S20) respectivement au moins une valeur de courant électrique respective dérivée des impulsions de tension électriques générées par le moyen de génération de tension (12) ; et
un moyen de calcul (16) qui est conçu pour :

- stocker une courbe de signal de courant des valeurs de courant mesurées en fonction des angles électriques prédéterminés ;
- générer une courbe de signal de courant à valeur moyenne nulle en décalant la courbe de signal de courant stockée ou les valeurs de courant mesurées ;
- calculer une fonction intégrale (83) de la courbe de signal de courant à valeur moyenne nulle ; et
- déterminer l'angle de position du rotor (2) sur la base de la fonction intégrale (83) calculée, **caractérisé en ce que** le moyen de calcul est en outre conçu pour déterminer (S60) l'angle de position du rotor (2) pour :

déterminer une valeur moyenne (84) de la fonction intégrale (83) calculée ; et
déterminer une première valeur d'angle (85) à laquelle la fonction intégrale calculée (83) intersecte la valeur moyenne déterminée (84) de la fonction intégrale calculée (83) ;
dans lequel la détermination (S60) de l'angle de position du rotor (2) est effectuée sur la base de la première valeur d'angle déterminée (85).

11. Dispositif (10) selon la revendication 10,

dans lequel le moyen de génération de tension (12) est conçu de telle sorte qu'un angle électrique respectif, augmenté de 180°, est également prédéterminé pour chaque angle prédéterminé ; et
dans lequel le moyen de calcul (16) est conçu pour stocker la courbe de signal de courant des valeurs de courant en fonction uniquement des angles dans une moitié de 360°, dans lequel la valeur pour chaque angle électrique prédéterminé dans ladite une moitié de 360° est établie à la fois à partir d'au moins une valeur de courant mesurée pour cet angle électrique prédéterminé et à partir d'au moins une valeur de courant mesurée pour l'angle électrique prédéterminé, décalé de 180°.

**Fig. 1**

**Fig. 2**

**Fig. 3**

**Fig. 4**

# Fig. 5

```
┌──────────┐
│          │～ S10
└──────────┘
     │
┌──────────┐
│          │～ S20
└──────────┘
     │
┌──────────┐
│          │～ S30
└──────────┘
     │
┌──────────┐
│          │～ S40
└──────────┘
     │
┌──────────┐
│          │～ S50
└──────────┘
     │
┌──────────┐
│          │～ S60
└──────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008042360 A1
- US 2007040528 A1
- EP 2437391 A1
- US 2015207446 A1


**In der Beschreibung aufgeführte Nicht-Patentliteratur**

- **M. SCHROEDL.** Sensorless control of AC machines at low speed and standstill based on the ''INFORM'' method. *Industry Applications Conference, 1996, 31st IAS Annual Meeting, Conference Record of the 1996 IEEE,* 1996, vol. 1, 270-277
- **J. HOLTZ.** Initial Rotor Polarity Detection and Sensorless Control of PM Synchronous Machines. *Industry Applications Conference, 2006, 41st IAS Annual Meeting, Conference Record of the 2006 IEEE,* 2006, vol. 4, 2040-2047